Europäisches Patentamt

European Patent Office

Office européen des brevets

(19)

(11) Publication number: **0 100 683**
**B1**

(12) **EUROPEAN PATENT SPECIFICATION**

(45) Date of publication of patent specification: **22.10.86**

(51) Int. Cl.⁴: **G 01 C 1/00**

(21) Application number: **83304464.7**

(22) Date of filing: **02.08.83**

(54) **Apparatus for taking azimuth sights.**

(30) Priority: **02.08.82 GB 8222235**

(43) Date of publication of application:
**15.02.84 Bulletin 84/07**

(45) Publication of the grant of the patent:
**22.10.86 Bulletin 86/43**

(84) Designated Contracting States:
**DE FR GB IT NL**

(56) References cited:
**GB-A- 384 847**
**GB-A- 445 310**

(73) Proprietor: **S.G. BROWN LIMITED**
**Greycaine Road**
**Watford, Hertfordshire WD2 4XU (GB)**

(73) Proprietor: **Vousden, James Bernard**
**Greycaine Road**
**Watford Hertfordshire WD2 4XU (GB)**

(72) Inventor: **Vousden, James Bernard**
**S.G. Brown Limited Greycaine Road**
**Watford Hertfordshire WD2 4XU (GB)**

(74) Representative: **Jones, Ian et al**
**POLLAK MERCER & TENCH High Holborn House**
**52-54 High Holborn**
**London WC1V 6RY (GB)**

## Description

The invention relates to the taking of azimuth sights.

It is conventional to provide on ships a compass, and usually several compass repeaters, in each of which a graduated scale rotates relative to the ship to maintain a predetermined orientation to enable the bearing of the ship to be read. So that such a compass or compass repeater can be used for taking bearings of terrestrial or celestial objects an azimuth circle may be provided. The azimuth circle is a separate piece of apparatus. which can be placed on the compass or repeater housing for manual movement thereon. The azimuth circle includes sighting means and is moved to align these with the object, the bearing of which can then be read from the scale.

It is a disadvantage of such arrangements that the azimuth circle is a separate device which must be movable relative to the compass or repeater. Both pieces of apparatus must have bearing surfaces which must be maintained in good condition.

UK Patent Specification 384847 describes an apparatus for facilitating the reading of navigational instruments. The apparatus has a compass bowl having a card, the image of which is viewed for correlation with a sight after refraction by a lens and reflection by a plane mirror.

The invention accordingly provides an apparatus for taking azimuth sights, the apparatus comprising curved graduated scale means and reflective means arranged to provide an observer with an image of part of the scale means for correlation with an object remote from the apparatus, the apparatus being characterized in that the reflective means is curved to extend around the scale means to permit selection of an image of a part the scale for correlation with the distant object.

The scale means preferably comprises a circular scale; the reflective means preferably comprises a frusto-conical mirror.

Advantageously, the reflective means and scale means are in a housing having a transparent viewing panel.

The bearing can be taken by means of a sighting element, for example an upright pin, located axially of the mirror, but additionally or instead use can be made of image distortion introduced by the mirror which has the effect of making only a graduation line viewed diametrally across the mirror appear precisely vertical.

In a modified form of apparatus, the mirror has a right cylindrical portion extending upwardly from the smaller diameter and to allow an image of a centrally located sighting means to be seen together with the scale image.

The housing of the apparatus of the invention will typically be gimbal mounted on a ship deck. The graduated scale will normally be a circular card driven to maintain a fixed orientation but a circular scale fixed with respect to the ship may be provided instead or as well.

Advantages of the invention are that it can be embodied in a single apparatus whereas the prior art required two separate parts and that the single apparatus is robust and simple both to make and to use.

Since apparatus according to the invention does not need to be turned in azimuth, the apparatus can be formed with substantially no moving parts. For this reason, the apparatus can be sealed against entry of dirt and spray. The apparatus can be incorporated into a compass or compass repeater on a ship's deck and need not be removed and returned under cover after use, as is the case with the known apparatus.

Embodiments of the invention will now be described by way of example with reference to the drawings, in which:—

Figure 1 is a somewhat schematic, vertical, sectional view of an apparatus for taking azimuth sights,

Figure 2 is a plan view of two scale cards of the apparatus of Figure 1, and

Figures 3 and 4 are views similar to Figure 1 of modified apparatuses.

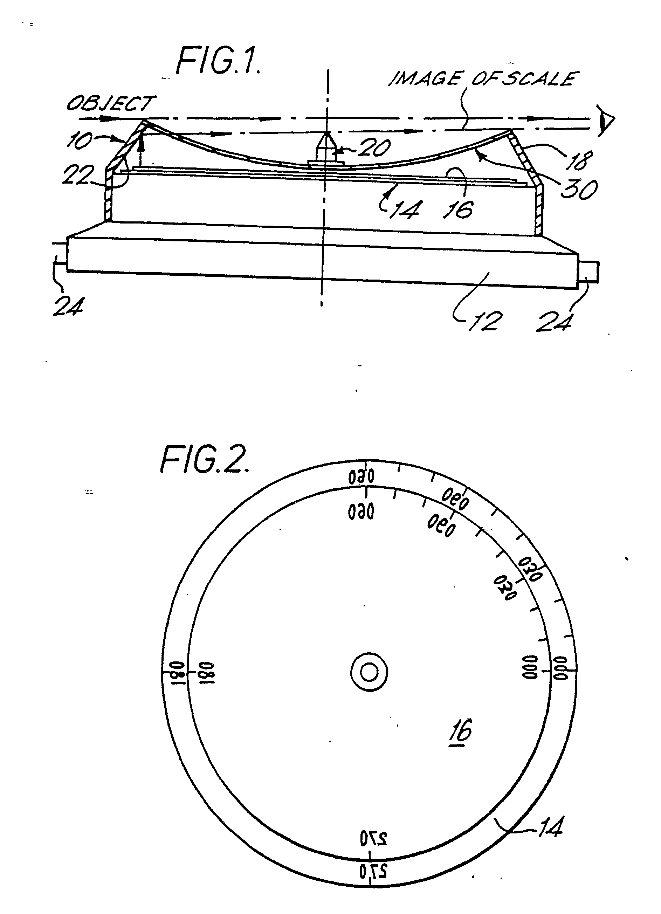

Figure 1 shows an apparatus 10 which includes a circular housing 12 in which graduated scale cards 14, 16 are supported. The lower scale card 14 is of larger diameter than the upper card 16 and is maintained in a fixed orientation by a compass or compass repeater in the conventional manner by means not shown. The upper card 16 is fixed relative to the ship on which the apparatus is mounted. Both scale cards 14, 16 have graduation lines extending radially inwards from their peripheries (see Figure 2). An upper wall portion 18 of the housing 12 tapers inwardly towards the top of the housing 10 and its inner surface is polished to provide a frusto-conical mirror surface 22 spaced from the graduation lines on the scale cards 14, 16. The numerals indicating degrees on the scale cards 14, 16 are laterally inverted (see Figure 2) so that they can be read normally after reflection in the mirror surface 22.

The housing 12 has an open circular top which is closed by a downwardly dished transparent circular panel 30, conveniently made from glass or plastics material. At its centre the dished panel 30 carries an open sight 20 in the form of an upright pin tapering to a point at its upper end.

A lower part of the housing 12 has bearings 24 allowing the apparatus to be gimbal mounted on the ship's deck.

Figure 2 shows the scale cards 14, 16 having graduation lines signifying angles and reversed figures indicating degrees. For clarity, only some of the graduation lines and figures are shown.

To take the bearing of a terrestrial object from the ship on which the apparatus 10 is mounted, the sight 20 is aligned by eye as shown in Figure 1 with the object and the bearing of the object is read-off from the scale cards 14, 16 reflected in the mirror surface 22 at the point diametrically opposite, the upper card 16 providing a bearing relative to the ship and the lower card 14 an absolute bearing.

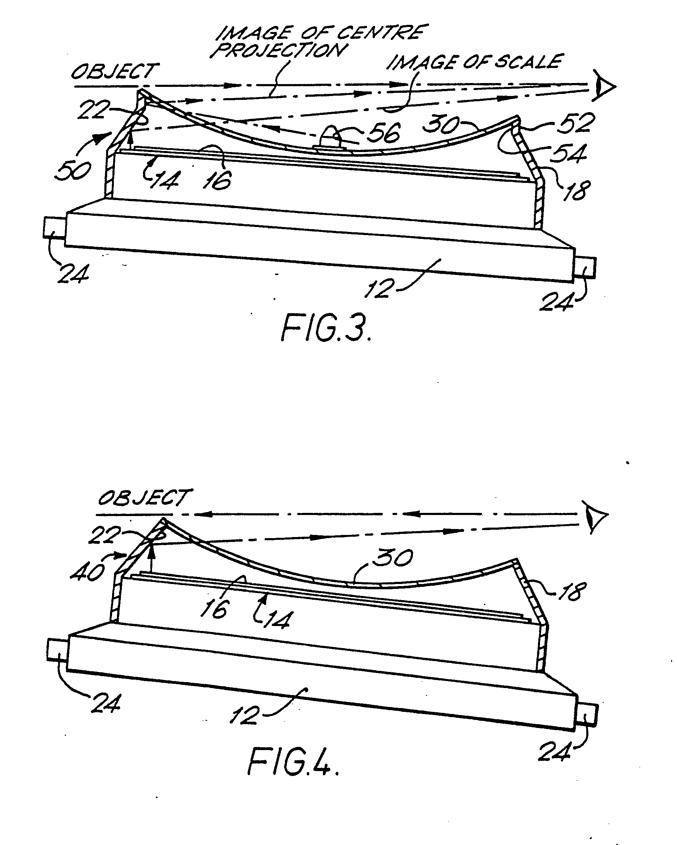

Because of the curvature of the mirror surface 22, the images reflected by the surface 22 of the graduation lines of the scale cards lying to each side of the graduation line which is diametrically opposite the user's eye will be curved and only the line which is diametrically opposite will provide an image which is a rectilinear. Accordingly, the graduation line on each respective scale card 14, 16 which corresponds to the bearing of the sighted object can be identified and, indeed, the sight 20 may be dispensed with, as shown in the modified apparatus of Figure 4.

Figure 4 shows an apparatus 40 which is identical to the apparatus 10 shown in Figure 1 except that the sight 20 is omitted. The elements of Figure 4 are indicated with reference numerals identical to the corresponding elements of Figure 1.

To take a bearing using the apparatus 40 of Figure 4 an identical procedure to that described above for the part 10 of Figure 1 is followed except that the correct bearings of the object sighted are identified by the images of the graduation line which appear as straight lines in the mirror surface 22.

Figure 3 shows another modified apparatus 50 and corresponding elements are again indicated by the same numerals as in Figures 1 and 4.

The apparatus 50 is identical to the apparatus 10 of Figure 1 with the exception that its housing 12 has a cylindrical upper wall portion 52 which is polished on its inner surface to provide a further cylindrical mirror surface 54 and that the open sight 20 of the apparatus 10 is replaced by a shorter cylindrical pin 56 also tapering to a point at its upper end.

To take a bearing using the apparatus 50 of Figure 3 a similar procedure to that described above for the apparatus 10 is followed except that the image of the pin 56 in the cylindrical mirror surface 54 is aligned with the sighted object and the bearings are read from the images of the scale cards in the frusto-conical mirror surface 22, the correct bearings being those corresponding to the graduation lines directly beneath the image of the pin 56 in the cylindrical mirror surface 54. As before, the identification of the correct graduation line is assisted by the images of the lines to each side of the correct line being distorted in the frusto-conical mirror surface 22.

The apparatus 10 or 50 shown in Figure 1 or Figure 3 may be conveniently fitted with a conventional attachment for taking bearings of celestial objects or objects exposed to glare. The attachment has a socket which is fitted over the pin 20 or 56 for rotational movement relative to the housing 12 of the apparatus 10 or 50. The attachment includes a glass panel, which may be a magnifying lens, having a sighting line for alignment with the sighted object and preferably includes a coloured reflector plate which is movable into a position in which it protects the user's eyes from glare. The attachment may also include means, for example a spirit level, for adjusting the apparatus on its gimbals into a horizontal position.

It should be noted that the user of the apparatus described does not need to place himself and his eye close to the apparatus. A reasonably accurate bearing can be obtained by a user standing as far as 0.5 m away from the apparatus. Moreover, the apparatus is particularly simple to use and instruction of the user prior to use of the apparatus need be only brief.

**Claims**

1. An apparatus for taking azimuth sights, the apparatus comprising curved graduated scale means (16, 14) and reflective means (22, 54) arranged to provide an observer with an image of part of the scale means for correlation with an object remote from the apparatus, the apparatus being characterized in that the reflective means is curved to extend around the scale means to permit selection of an image of a part the scale for correlation with the distant object.

2. An apparatus according to claim 1, wherein the scale means comprises a circular scale.

3. An apparatus according to claim 1 or 2, wherein the reflective means comprises a frusto-conical mirror (22; 54).

4. An apparatus according to claim 3, including a sighting element (20; 56), located axially to the mirror.

5. An apparatus according to claim 4, wherein the sighting element is an upright pin (20; 56).

6. An apparatus according to any one of claims 3 to 5, wherein the reflective means has a right cylindrical portion (54) extending upwardly from the smaller diameter end of the frusto-conical mirror (22) to allow an image of the sighting element to be seen together with the scale image.

7. An apparatus according to any one of claims 1 to 6, wherein the reflective means and scale means are in a housing having a transparent viewing panel.

8. A compass or compass repeater including an apparatus according to any one of claims 1 to 7, a scale member (14) of the scale means being coupled with the compass or repeater to be maintained in a fixed orientation relative to the direction-indicating element of the compass or repeater.

9. A compass or compass repeater according to claim 8, including a further scale member (16) of the graduated scale means, which further member can be maintained, in use of the compass or compass repeater, in a fixed orientation relative to a structure on which the compass or compass repeater is mounted.

**Patentansprüche**

1. Vorrichtung für Azimuth-Beobachtungen, mit gekrümmten, graduierten Skalenmitteln (16, 14) und reflektierenden Mitteln (22, 54), die so angeordnet sind, daß sie einen Beobachter mit einem Bild eines Teils der Skalenmittel versorgt, und zwar für die Korrelation mit einem entfernt von der Vorrichtung befindlichen Objekt, dadurch gekennzeichnet, daß die reflektierenden Mittel so gekrümmt ausgebildet sind, daß sie um die Skalenmittel verlaufen und so die Auswahl eines Bildes eines Teils der Skala erlauben, und zwar für die Korrelation mit dem entfernten Objekt.

2. Vorrichtung nach Anspruch 1, bei der die Skalenmittel eine Kreisskala umfassen.

3. Vorrichtung nach Anspruch 1 oder 2, bei der die reflektierenden Mittel einen kegelstumpfförmigen Spiegel (22; 44) umfassen.

4. Vorrichtung nach Anspruch 3, bei der ein Beobachtungselement (20; 46) axial zum Spiegel angeordnet ist.

5. Vorrichtung nach Anspruch 4, bei der das Beobachtungselement ein aufrechter Stift (20; 56) ist.

6. Vorrichtung nach einem der Ansprüche 3 bis 5, bei der die reflektierenden Mittel einen geraden zylindrischen Abschnitt (54) umfassen, der von dem Ende kleineren Durchmessers des kegelstumpfförmigen Spiegels (22) nach oben verläuft, damit ein Bild des Beobachtungselementes zusammen mit dem Skalenbild zu sehen ist.

7. Vorrichtung nach einem der Ansprüche 1 bis 6, bei der die reflektierenden Mittel und die Skalenmittel sich in einem Gehäuse befinden, welches eine transparente Sichttafel hat.

8. Kompaß oder Tochterkompaß mit einer Vorrichtung nach einem der Ansprüche 1 bis 7, bei dem ein Skalenteil (14) der Skalenmittel mit dem Kompaß oder dem Tochterkompaß verbunden ist, um in einer festen Ausrichtung relativ zum Richtungsanzeigeelement des Kompaß oder Tochterkompaß zu verbleiben.

9. Kompaß oder Tochterkompaß nach Anspruch 8, bei dem ein weiteres Skalenteil (16) der graduierten Skalenmittel vorgesehen ist, welches weitere Teil bei der Verwendung des Kompasses oder der Tochterkompasses in einer festen Ausrichtung zum Aufbau gehalten werden kann, an dem der Kompaß oder Tochterkompaß angebracht ist.

## Revendications

1. Appareil de relèvement aximuthal, l'appareil comprenant des moyens à échelle graduée arquée (16, 14) et des moyens réfléchissants (22, 54) disposés de façon à fournir à un observateur une image d'une partie des moyens à échelle pour corrélation avec un objet éloigné de l'appareil, cet appareil étant caractérisé en ce que les moyens réfléchissants sont arqués de façon à s'étendre autour des moyens à échelle pour permettre la sélection d'une image d'une partie de l'échelle pour corrélation avec l'objet éloigné.

2. Appareil suivant la revendication 1, caractérisé en ce que les moyens à échelle comprennent une échelle circulaire.

3. Appareil suivant la revendication 1 ou 2, caractérisé en ce que les moyens réfléchissants comprennent un miroir tronconique (22, 54).

4. Appareil suivant la revendication 3, caractérisé en ce qu'il comprend un élément de visée (20, 56), situé axialement par rapport au miroir.

5. Appareil suivant la revendication 4, caractérisé en ce que l'élément de visée est une tige pointue (20, 56) disposée verticalement.

6. Appareil suivant l'une quelconque des revendications 3 à 5, caractérisé en ce que les moyens réfléchissants comprennent une portion cylindrique (54) droite s'étendant vers le haut depuis l'extrémité de petit diamètre du miroir tronconique (22) de façon à permettre qu'une image de l'élément de visée soit vue conjointement avec l'image de l'échelle.

7. Appareil suivant l'une quelconque des revendications 1 à 6, caractérisé en ce que les moyens réfléchissants et les moyens à échelle sont placés dans un bâti comprenant un panneau d'observation transparent.

8. Compas ou répétiteur comprenant un appareil suivant l'une quelconque des revendications 1 à 7, un membre (14) des moyens à échelle étant couplé avec le compas ou le répétiteur de façon à être maintenu dans une orientation fixe par rapport à l'élément indiquant la direction du compas ou du répétiteur.

9. Compas ou répétiteur suivant la revendication 8, comprenant un membre supplémentaire (16) des moyens à échelle graduée, lequel membre supplémentaire peut être maintenu, au cours de l'utilisation du compas ou du répétiteur, dans une orientation fixe par rapport à une structure sur laquelle le compas ou le répétiteur est monté.

# FIG.1.

OBJECT

IMAGE OF SCALE

10

22

20

18

30

14    16

24

12    24

# FIG.2.

16

14

IMAGE OF CENTRE
PROJECTION

OBJECT

IMAGE OF SCALE

22

56    30    52

54

50

14    16

18

24

12

24

FIG.3.

OBJECT

22

30

40

18

16    14

24

12

24

FIG.4.